(19) Europäisches Patentamt
European Patent Office
Office européen des brevets

(11) **EP 4 516 938 A1**

(12) **EUROPEAN PATENT APPLICATION**
published in accordance with Art. 153(4) EPC

(43) Date of publication:
05.03.2025 Bulletin 2025/10

(21) Application number: 22940405.8

(22) Date of filing: 16.12.2022

(51) International Patent Classification (IPC):
*C21D 9/46* (2006.01)      *C21D 8/02* (2006.01)
*B21D 22/02* (2006.01)      *C23C 2/06* (2006.01)
*C23C 2/12* (2006.01)

(52) Cooperative Patent Classification (CPC):
B21D 22/02; C21D 8/02; C21D 9/46; C23C 2/06;
C23C 2/12

(86) International application number:
PCT/KR2022/020566

(87) International publication number:
WO 2023/210911 (02.11.2023 Gazette 2023/44)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.04.2022 KR 20220053729

(71) Applicant: Hyundai Steel Company
Incheon 22525 (KR)

(72) Inventors:
• JANG, Min Ho
Incheon 22525 (KR)
• KANG, Seok Hyeon
Incheon 22525 (KR)
• PARK, Min Suh
Incheon 22525 (KR)
• HAN, Seong Kyung
Incheon 22525 (KR)

(74) Representative: Viering, Jentschura & Partner mbB
Patent- und Rechtsanwälte
Am Brauhaus 8
01099 Dresden (DE)

(54) **HOT STAMPING COMPONENT AND MANUFACTURING METHOD THEREFOR**

(57) The present disclosure provides a method of manufacturing a hot-stamped part, the method including: forming a blank by cutting a plated steel sheet having a plating layer formed on at least one surface of a base material; and heating the blank in a heating furnace including a plurality of sections having different temperature ranges, wherein the heating of the blank includes: a multistage heating operation of heating the blank in stages; and a soaking operation of soaking the blank, which has been heated in the stages, in a temperature of Ac3 to 910 °C, and a temperature $a_n$ in the soaking operation and a total heating time $b_n$ in the heating of the blank satisfy the following relational expression.

<Relational expression>

$$62 \leq 91.81 + K - 0.022 \times a_n - 0.23 \times b_n$$

(In the above relational expression, K denotes a material correction coefficient.)

FIG. 1

## Description

### Technical Field

The present disclosure relates to a hot-stamped part and a method of manufacturing the same.

### Background Art

As global environmental and fuel economy regulations become more stringent, the need for lighter vehicle materials is increasing. Accordingly, research and development on ultra-high-strength steel and hot-stamped steel have been actively conducted.

In general, a hot stamping process includes heating/forming/cooling/trimming, and may utilize the phase transformation and microstructural changes of a material during the process. In order to improve the toughness of hot-stamped steel, research has been actively conducted, focusing on improving the toughness of a base material by using alloying elements.

However, modifying or increasing alloying elements may lead to increased costs, resulting in economic feasibility issues.

As a related technique, there is Korean Patent Publication No. 10-2021-0129902 (entitled 'HOT-STAMPED PART AND METHOD OF MANUFACTURING THE SAME').

### Disclosure of Invention

### Technical Problem

Embodiments of the present disclosure may improve the bending characteristics of a manufactured hot-stamped part by ensuring that a temperature in a soaking operation and a total heating time in a heating operation satisfy a preset relational expression.

### Solution to Problem

An embodiment of the present disclosure provides a method of manufacturing a hot-stamped part, the method including: forming a blank by cutting a plated steel sheet having a plating layer formed on at least one surface of a base material; and heating the blank in a heating furnace including a plurality of sections having different temperature ranges, wherein the heating of the blank includes: a multistage heating operation of heating the blank in stages; and a soaking operation of soaking the blank, which has been heated in the stages, in a temperature of Ac3 to 910°C, and a temperature $a_n$ in the soaking operation and a total heating time $b_n$ in the heating of the blank satisfy the following relational expression.

<Relational expression>

$$62 \leq 91.81 + K - 0.022 \times a_n - 0.23 \times b_n$$

(In the above relational expression, K denotes a material correction coefficient.)

In the present embodiment, the total heating time $b_n$ in the heating of the blank may be 2 min to 20 min.

In the present embodiment, the material correction coefficient K may be $0.71 \times c_n - 0.025 \times d_n$, wherein $c_n$ may denote a dew point of an annealing furnace of the base material, and $d_n$ may denote a line speed of the annealing furnace of the base material.

In the present embodiment, the dew point $c_n$ of the annealing furnace of the base material may be -15 °C to +15 °C.

In the present embodiment, the line speed $d_n$ of the annealing furnace of the base material may be 30 mpm to 200 mpm.

In the present embodiment, an annealing temperature of the base material may be 750 °C to 900 °C.

In the present embodiment, annealing of the base material may be performed in a gas atmosphere including 0.5 volume% to 25 volume% of hydrogen and a remainder of nitrogen.

In the present embodiment, a decarburized layer may be further formed on the base material.

In the present embodiment, a thickness of the decarburized layer may be 10 $\mu$m to 100 $\mu$m.

In the present embodiment, an average hardness of the decarburized layer may be less than or equal to 80 % of an average hardness of a 1/4 point from a surface of the base material.

In the present embodiment, the plating layer may be a zinc (Zn)-based plating layer or an aluminum (Al)-based plating layer.

In the present embodiment, a thickness of the plating layer may be 5 $\mu$m to 30 $\mu$m.

In the present embodiment, the method may further include: after the heating of the blank, transferring the heated blank; forming a molded body by pressing the transferred blank with a mold; and cooling the formed molded body.

Another embodiment of the present disclosure provides a hot-stamped part including: a base material; a decarburized layer formed on the base material; and a plating layer formed on the decarburized layer, wherein the hot-stamped part has a tensile strength (TS) of 1,680 MPa to 2,000 MPa, a yield strength (YP) of 1,150 MPa to 1,500 MPa, and an elongation (EL) of 4 % to 10 %.

In the present embodiment, an average hardness of the decarburized layer may be less than or equal to 70 % of an average hardness of a 1/4 point from a surface of the base material.

In the present embodiment, a content of carbon included in the plating layer may be less than or equal to 50 % of a content of carbon included in the base material.

In the present embodiment, the hot-stamped part may have a microstructure including a martensite fraction of 90 % or greater.

In the present embodiment, a thickness of the decarburized layer may be 10 $\mu$m to 100 $\mu$m.

In the present embodiment, a thickness of the plating layer may be 7 $\mu$m to 40 $\mu$m.

Other aspects, features, and advantages than those described above will become clear from the following detailed description, claims, and drawings for carrying out the present disclosure.

**Advantageous Effects of Invention**

According to an embodiment of the present disclosure as described above, by ensuring that the temperature in a soaking operation and a total heating time in an operation of heating a blank satisfy a preset relational expression, the toughness of a manufactured hot-stamped part may be improved.

In addition, according to an embodiment of the present disclosure, the toughness of a manufactured hot-stamped part may be improved by increasing the dew point of an annealing furnace to form a decarburized layer on the surface of a base material.

**Brief Description of Drawings**

FIG. 1 is a cross-sectional view schematically illustrating a hot-stamped part according to an embodiment of the present disclosure.

FIG. 2 is a flowchart schematically illustrating a method of manufacturing a hot-stamped part according to an embodiment of the present disclosure.

FIGS. 3 to 5 are cross-sectional views schematically illustrating a method of manufacturing a hot-stamped part according to an embodiment of the present disclosure.

FIG. 6 is a flowchart schematically illustrating a hot-stamping operation according to an embodiment of the present disclosure.

FIG. 7 is a flowchart schematically illustrating a heating operation according to an embodiment of the present disclosure.

FIG. 8 is a diagram for describing a heating furnace including a plurality of sections for a heating operation of a method of manufacturing a hot-stamped part, according to an embodiment of the present disclosure.

**Mode for the Invention**

As the present disclosure allows for various changes and numerous embodiments, particular embodiments will be illustrated in the drawings and described in detail. Advantages and features of the present disclosure and a method of achieving the same should become clear with embodiments described below in detail with reference to the drawings. However, the present disclosure is not limited to the embodiments disclosed below, but may be implemented in various forms.

In the following embodiments, terms such as "first," "second," etc., are used only to distinguish one component from another, and such components must not be limited by these terms.

In the following embodiments, the singular expression also includes the plural meaning as long as it is not inconsistent with the context.

In the following embodiments, the terms "comprises," "includes," "has", and the like used herein specify the presence of stated features or components, but do not preclude the presence or addition of one or more other features or components.

In the following embodiments, when a layer, region, or component is referred to as being "on" another layer, region, or component, it may be directly or indirectly on the other layer, region, or component, that is, one or more intervening layers, regions, or components may be present therebetween.

For convenience of description, the magnitude of components in the drawings may be exaggerated or reduced. For example, because the size and thickness of each component illustrated in the drawing are arbitrarily shown for convenience of description, the present disclosure is not necessarily limited to those illustrated in the drawing.

In the present specification, "A and/or B" indicates A, B, or both A and B. In addition, in the present specification, "at least one of A and B" indicates A, B, or both A and B.

In the following embodiments, when a wire is referred to as "extending in a first direction or a second direction", the wire may extend not only in a straight shape but also in a zigzag or curved shape in the first direction or the second direction.

In the following embodiments, "in a plan view" or "on a plane" means viewing a target portion from the top, and the phrase "in a cross-sectional view" or "on a cross-section" means viewing, from the side, a cross-section formed by vertically cutting a target portion. In the following embodiments, when two or more elements are referred to as "overlapping with each other", they may overlap with each other "on a plane" or "on a cross-section".

Hereinafter, embodiments of the present disclosure will be described in detail with reference to the accompanying drawings, and the same or corresponding components will be denoted by the same reference numerals when described with reference to the accompanying drawings.

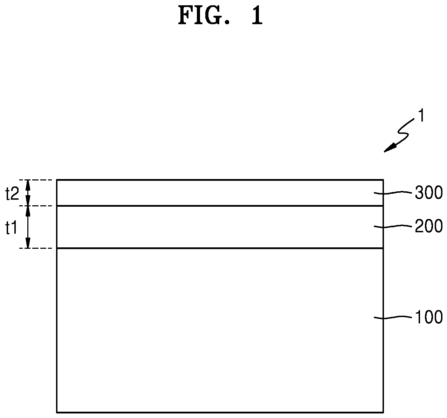

FIG. 1 is a cross-sectional view schematically illustrating a hot-stamped part according to an embodiment of the present disclosure.

Referring to FIG. 1, a hot-stamped part 1 according to an embodiment may include a base material 100, a decarburized layer 200, and a plating layer 300. The base material 100, the decarburized layer 200, and the plating layer 300 may be sequentially stacked in the thickness direction of the hot-stamped part 1.

In an embodiment, the base material 100 may include carbon (C), silicon (Si), manganese (Mn), phosphorus (P), sulfur (S), boron (B), the remainder iron (Fe), and other inevitable impurities. For example, the base material 100 may include about 0.25 wt% to about 0.5 wt% of carbon (C), about 0.1 wt% to about 0.8 wt% of silicon (Si), about 0.3 wt% to about 3.0 wt% of manganese (Mn), 0 wt% to about 0.05 wt% of phosphorus (P), 0 wt% to about 0.01 wt% of sulfur (S), about 0.0005 wt% to about 0.005 wt% of boron (B), the remainder of iron (Fe), and other inevitable impurities.

In addition, the base material 100 may further include one or more of titanium (Ti), niobium (Nb), and vanadium (V). In addition, the base material 100 may further include chromium (Cr), molybdenum (Mo), and nickel (Ni).

The base material 100 may further include one or more of titanium (Ti), niobium (Nb), and vanadium (V), the sum of which may be about 0.01 wt% to about 0.1 wt%. For example, the base material 100 may include titanium (Ti) and niobium (Nb), and the sum of the weight percentages of titanium (Ti) and niobium (Nb) included in the base material 100 may be about 0.01 wt% to about 0.1 wt%.

In addition, the base material 100 may further include about 0.01 wt% to about 1.0 wt% of chromium (Cr), about 0.01 wt% to about 1.0 wt% of molybdenum (Mo), and about 0.001 wt% to about 1.0 wt% of nickel (Ni).

Carbon (C) is a major element that determines the strength and hardness of steel, and may be added to secure the tensile strength of steel after a hot-stamping (or hot-pressing) process. In addition, carbon (C) may be added to secure hardenability characteristics of steel. In an embodiment, carbon (C) may be included in an amount of about 0.25 wt% to about 0.5 wt% based on the total weight of the base material 100. In a case in which carbon (C) is included in an amount of less than about 0.25 wt% based on the total weight of the base material 100, it may be difficult to achieve a desired mechanical strength. On the contrary, in a case in which carbon (C) is included in an amount of greater than about 0.5 wt% based on the total weight of the base material 100, it may lead to an issue of reduced toughness of steel or an issue of controlling the brittleness of steel.

Silicon (Si) may act as a ferrite stabilizing element in the base material 100. Silicon (Si) may improve ductility by purifying ferrite and improve the carbon concentration in austenite by suppressing formation of low-temperature carbides. Furthermore, silicon (Si) may be a key element in hot-rolling, cold-rolling, and hot-stamping structure homogenization (control of perlite and manganese segregation) and ferrite fine dispersion. In an embodiment, silicon (Si) may be included in an amount of about 0.1 wt% to about 0.8 wt% based on the total weight of the base material 100. In a case in which silicon (Si) is included in an amount of less than about 0.1 wt% based on the total weight of the base material 100, the above-described functions may not be sufficiently exhibited. On the contrary, in a case in which silicon (Si) is included in an amount of greater than about 0.8 wt% based on the total weight of the base material 100, hot-rolling and cold-rolling loads may increase, red scale in hot rolling may become excessive, and bonding properties may deteriorate.

Manganese (Mn) may be added for to increase hardenability and strength during heat treatment. In an embodiment, manganese (Mn) may be included in an amount of about 0.3 wt% to about 3.0 wt% based on the total weight of the base material 100. In a case in which manganese (Mn) is included in an amount of less than about 0.3 wt% based on the total weight of the base material 100, it may be highly likely that the resulting material quality will be insufficient (insufficient hard phase fraction) after hot stamping due to insufficient hardenability. On the contrary, in a case in which manganese (Mn) is included in an amount of greater than about 3.0 wt% based on the total weight of the base material 100, ductility and toughness may be reduced due to manganese segregation or pearlite bands, which may cause a decrease in bending performance and may cause the occurrence of an inhomogeneous microstructure.

Phosphorus (P) is an element that is easily segregated, and may impair the toughness of steel. In an embodiment, phosphorus (P) may be included in an amount of 0 wt% to about 0.05 wt% based on the total weight of the base material 100. In a case in which phosphorus (P) is included in an amount within the above-described range based on the total weight of the base material 100, a deterioration of the toughness of steel may be prevented. On the contrary, in a case in which phosphorus (P) is included in an amount of greater than 0.05 wt% based on the total weight of the base material 100, cracks may occur during processes and iron phosphide compounds may be formed, resulting in a decrease in the toughness of steel.

Sulfur (S) may be an element that impairs workability and physical properties. In an embodiment, sulfur (S) may be included in an amount of 0 wt% to about 0.01 wt% based on the total weight of the base material 100. In a case in which sulfur (S) is included in an amount of greater than about 0.01 wt% based on the total weight of the base material 100, hot workability may be reduced and surface defects such as cracks may occur due to the formation of large inclusions.

Boron (B) is added to secure the hardenability and strength of steel by securing a martensitic structure, and may have an effect of refining grains by increasing the austenite grain growth temperature. In an embodiment, boron (B) may be included in an amount of about 0.0005 wt% to about 0.005 wt% based on the total weight of the base material 100. In a case in which boron (B) is included in an amount within the above-described range based on the total weight of the base material 100, the occurrence of hard grain boundary brittleness may be prevented and high toughness and bendability may be secured.

Titanium (Ti) may be added to enhance hardenability and improving material quality by forming precipitates after hot-stamping heat treatment. In addition, titanium (Ti) may effectively contribute to refinement of austenite grains by forming a precipitated phase such as Ti(C, N) at a high temperature.

Niobium (Nb) may be added to increase strength and toughness by reducing a martensite packet size.

Vanadium (V) may be added to enhance the strength of steel through a precipitation strengthening effect caused by the formation of precipitates.

In an embodiment, titanium (Ti), niobium (Nb), and vanadium (V) may be optionally included in the base material 100. Here, in a case in which at least one of titanium (Ti), niobium (Nb), and vanadium (V) is included in the base material 100, the sum of at least one component of titanium (Ti), niobium (Nb), and vanadium (V) may be about 0.01 wt% to about 0.1 wt%.

Chromium (Cr) may be added to improve the hardenability and strength of steel. In an embodiment, chromium (Cr) may be included in an amount of about 0.01 wt% to about 1.0 wt% based on the total weight of the base material 100. In a case in which chromium (Cr) is included in an amount within the above-described range based on the total weight of the base material 100, the hardenability and strength of steel may be improved, an increase in the production costs may be prevented, and a decrease in the toughness of the steel may be prevented.

Molybdenum (Mo) may contribute to improving strength by suppressing coarsening of precipitates and increasing hardenability during hot rolling and hot stamping. Molybdenum (Mo) may be included in an amount of about 0.01 wt% to about 1.0 wt% based on the total weight of the base material 100. In a case in which molybdenum (Mo) is included in an amount within the above-described range based on the total weight of the base material 100, an excellent effect of suppressing coarsening of precipitates and increasing hardenability during hot rolling and hot stamping may be exhibited.

Nickel (Ni) may be added to improve hardenability and strength. In addition, nickel (Ni) is an austenite stabilizing element that may contribute to improving elongation by controlling austenite transformation. In an embodiment, nickel (Ni) may be included in an amount of about 0.001 wt% to about 1.0 wt% based on the total weight of the base material 100. In a case in which nickel (Ni) is contained in an amount of less than about 0.001 wt% based on the total weight of the base material 100, it may be difficult to properly implement the above-described effects. In a case in which nickel (Ni) is included in an amount of greater than about 1.0 wt% based on the total weight of the base material 100, toughness may be reduced, cold workability may be reduced, and the manufacturing costs of the product may increase.

In an embodiment, the base material 100 may have a microstructure including a martensite fraction of about 90 % or greater. In detail, the base material 100 may include about 90 % or greater of martensite, and less than about 10 % of other remaining inevitable structures and precipitates.

In an embodiment, the decarburized layer 200 may be arranged on the base material 100. In a case in which the decarburized layer 200 is formed on the base material 100, the toughness of the hot-stamped part 1 including them may be improved.

A layer having a hardness of about 70 % or less compared to the average hardness of a point at about 1/4 from the surface of the base material 100 may be defined as the decarburized layer 200. Alternatively, a layer having a hardness of about 70 % or less compared to the average hardness of a point at about 1/4 from the surface of the hot-stamped part 1 may be defined as the decarburized layer 200. That is, the average hardness of the decarburized layer 200 may be about 70 % or less compared to the average hardness of a point at about 1/4 from the surface of the base material 100 or from the surface of the hot-stamped part 1. In other words, the average hardness of the decarburized layer 200 may be about 70 % or less of the average hardness of a point at about 1/4 from the surface of the base material 100 or from the surface of the hot-stamped part 1.

The decarburized layer 200 may be provided with a thickness t1 of about 10 $\mu$m to about 100 $\mu$m in the thickness direction of the hot-stamped part 1. In a case in which the thickness t1 of the decarburized layer 200 is about 10 $\mu$m or less, the effect of improving toughness may be minimal, and in a case in which the thickness t1 of the decarburized layer 200 is about 100 $\mu$m or greater, the thickness of the decarburized layer 200 may be too thick, resulting in a decrease in the strength of the hot-stamped part 1 including the decarburized layer 200. Thus, in a case in which the thickness t1 of the decarburized layer 200 is about 10 $\mu$m to about 100 $\mu$m, the toughness of the hot-stamped part 1 may be improved while preventing or minimizing a decrease in the strength of the hot-stamped part 1.

In an embodiment, the plating layer 300 may be arranged on the decarburized layer 200. The plating layer 300 may be a zinc (Zn)-based plating layer or an aluminum (Al)-based plating layer. For example, the plating layer 300 may include zinc (Zn) and/or aluminum (Al).

In an embodiment, in a case in which the plating layer 300 is provided as a zinc (Zn)-based plating layer, the plating layer 300 may include iron (Fe), aluminum (Al), manganese (Mn), silicon (Si), the remainder of zinc (Zn), and other inevitable impurities. For example, the plating layer 300 may include about 10 wt% to about 70 wt% of iron (Fe), 0 wt% to about 5 wt% of aluminum (Al), 0 wt% to about 1 wt% of manganese (Mn), 0 wt% to about 1 wt% of silicon (Si), the remainder of zinc (Zn), and other inevitable impurities. In addition, the plating layer 300 may further include carbon (C). In this case, the content of carbon (C) included in the plating layer 300 may be 50 % or less of the content of carbon (C) included in the base material 100. For example, in a case in which the base material 100 includes about 0.25 wt% to about 0.5 wt% of carbon (C), the plating layer 300 may include 0 wt% to about 0.25 wt% of carbon (C).

The plating layer 300 may be provided with a thickness t2 of about 7 $\mu$m to about 40 $\mu$m in the thickness direction of the hot-stamped part 1. In a case in which the thickness t2 of the plating layer 300 is about 7 $\mu$m or less, the sacrificial effect unique to zinc may be reduced, and in a case in which the thickness t2 of the plating layer 300 is about 40 $\mu$m or greater, the thickness of the plating layer 300 may be too thick, resulting in a decrease in the toughness of the hot-stamped part 1 including the plating layer 300. Thus, in a case in which the thickness t2 of the plating layer 300 is about 7 $\mu$m to about 40 $\mu$m, the surface of the base material (or steel material) may be protected while preventing or minimizing a decrease in the toughness of the hot-stamped part 1.

In an embodiment, the hot-stamped part 1 may have a tensile strength (TS) of about 1,680 MPa to about 2,000 MPa, a yield strength (YP) of about 1,150 MPa to about 1,500 MPa, and an elongation (EL) of about 4 % to about 10 %. In addition, the hot-stamped part 1 may have a VDA (Verband der Automobilindustrie) bending angle of about 60° or greater. Here, the VDA bending angle may be measured according to the VDA standard (VDA238-100).

Accordingly, the inventor of the present disclosure has derived, through excessively repeated experiments, relational expression 1 that enables the hot-stamped part 1 to have a VDA bending angle of about 60° or greater. In an embodiment, the hot-stamped part 1 may satisfy relational expression 1 below.

<Relational expression 1>

$$60 \leq 176.92 + 1.25 \times c_m - 0.15 \times a_m - 0.52 \times b_m$$

In relational expression 1, $a_m$ denotes a temperature in a soaking operation, $b_m$ denotes a total heating time in a heating operation (e.g., a total heating time in an operation of heating a blank), and $c_m$ denotes the thickness of the decarburized layer.

In relational expression 1, $a_m$ may denote a temperature in a soaking operation, the unit of the temperature in the soaking operation may be °C, and the value of $a_m$ may represent the value of the temperature in the soaking operation in °C. For example, in a case in which the temperature in the soaking operation is 900 °C, the value of $a_m$ may be 900.

In relational expression 1, $b_m$ may denote a total heating time in the operation of heating the blank, the unit of the total heating time in the operation of heating the blank may be minutes (min), and $b_m$ may represent the value of the total heating time in the operation of heating the blank in minutes. For example, in a case in which the total heating time in the operation of heating the blank is 5 min, the value of $b_m$ may be 5.

In relational expression 1, $c_m$ may denote the thickness of the decarburized layer, the unit of the thickness of the decarburized layer may be $\mu$m, and $c_m$ may represent a value in $\mu$m. For example, in a case in which the thickness of the decarburized layer is 40 $\mu$m, the value of $c_m$ may be 40.

In an embodiment, the thickness $c_m$ of the decarburized layer 200, the temperature $a_m$ in the soaking operation, and the total heating time $b_m$ in the operation of heating the blank may satisfy relational expression 1 above. Here, the thickness $c_m$ of the decarburized layer 200 may be about 10 $\mu$m to about 100 $\mu$m, the temperature $a_m$ in the soaking operation may be about Ac3 to about 910 °C, and the total heating time $b_m$ in the operation of heating the blank may be about 2 min to about 20 min.

In a case in which the thickness $c_m$ of the decarburized layer 200, the temperature $a_m$ in the soaking operation, and the total heating time $b_m$ in the operation of heating the blank satisfy relational expression 1 above, the toughness of the manufactured hot-stamped part 1 may be improved. In detail, in a case in which the thickness $c_m$ of the decarburized layer 200, the temperature $a_m$ in the soaking operation, and the total heating time $b_m$ in the operation of heating the blank satisfy relational expression 1 above, the toughness of the manufactured hot-stamped part 1 may have a VDA bending angle of about 60° or greater. In addition, in a case in which the thickness $c_m$ of the decarburized layer 200, the temperature $a_m$ in the soaking operation, and the total heating time $b_m$ in the operation of heating the blank satisfy relational expression 1 above, the manufactured hot-stamped part 1 may have a tensile strength (TS) of about 1,680 MPa to about 2,000 MPa, a yield strength (YP) of about 1,150 MPa to about 1,500 MPa, and an elongation (EL) of about 4 % to about 10 %.

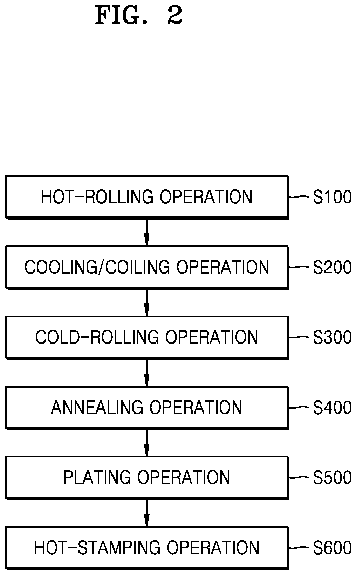

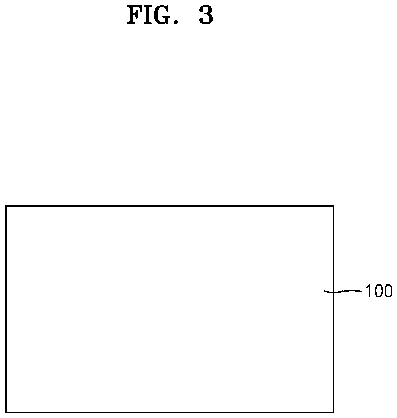

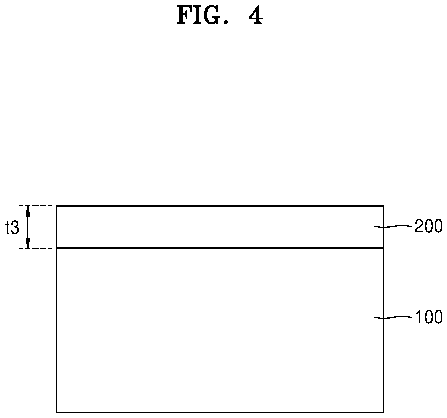

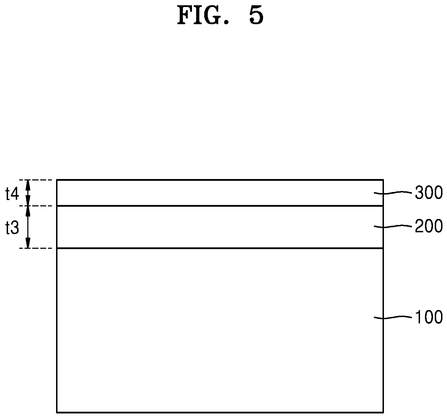

FIG. 2 is a flowchart schematically illustrating a method of manufacturing a hot-stamped part according to an embodiment of the present disclosure, and FIGS. 3 to 5 are cross-sectional views schematically illustrating a method of manufacturing a hot-stamped part according to an embodiment of the present disclosure.

Referring to FIGS. 2 to 5, according to an embodiment, the method of manufacturing a hot-stamped part may include a hot-rolling operation S100, a cooling/coiling operation S200, a cold-rolling operation S300, an annealing operation S400, a plating operation S500, and a hot-stamping operation S600.

First, an operation of reheating the base material 100 (e.g., a steel slab) prepared with the composition described above with respect to FIG. 1 may be performed. In the operation of reheating the steel slab, a steel slab obtained through a continuous casting process may be reheated at a certain temperature such that components segregated during casting may be re-dissolved. In an embodiment, a slab reheating temperature (SRT) may be about 1,200 °C to about 1,400 °C. When the slab reheating temperature (SRT) is less than 1,200 °C, the components segregated during casting are not sufficiently re-dissolved, thus, a homogenization effect of an alloy element may not be significantly achieved, and a solid solution effect of titanium (Ti) may not be significantly achieved. A high slab reheating temperature (SRT) is favorable for homogenization, however, in a case in which the slab reheating temperature (SRT) is greater than about 1,400 °C, an austenite grain size may increase, making it difficult to secure strength while increasing the manufacturing costs of a steel sheet due to an excessive heating process.

In the hot-rolling operation S100, the reheated base material 100 may be hot-rolled at a certain finishing delivery temperature. A hot-rolled steel sheet may be manufactured through the hot-rolling operation S100. In an embodiment, the finishing delivery temperature (FDT) may be about 880 °C to about 950 °C. Here, when the finishing delivery temperature (FDT) is less than about 840 °C, it may be difficult to secure the workability of the steel sheet due to the occurrence of a duplex grain structure due to rolling over an abnormal area, the workability may deteriorate due to the microstructure unevenness, and a passing ability may occur during hot rolling due to a rapid phase change. When the finishing delivery temperature (FDT) is greater than about 950 °C, austenite grains may be coarsened and TiC precipitates may be coarsened, which may deteriorate the performance of the hot-stamped part.

In the cooling/coiling operation S200, the hot-rolled base material 100 may be cooled to a certain coiling temperature (CT) and then coiled. In an embodiment, the coiling temperature in the cooling/coiling operation S200 may be about 550 °C to about 800 °C. The coiling temperature affects the redistribution of carbon (C), and in a case in which the coiling temperature is less than about 550 °C, the low-temperature phase fraction due to overcooling may increase, which may increase the strength, and the rolling load during cold rolling may be severe, and the ductility may rapidly decrease. On the contrary, in a case in which the coiling temperature is greater than about 800 °C, formability deterioration and strength deterioration may occur due to abnormal grain growth or excessive grain growth.

In the cold-rolling operation S300, the coiled base material 100 may be uncoiled, pickled, and then cold-rolled. Here, pickling may be performed to remove scale of the coiled steel sheet (or base material), that is, a hot-rolled coil manufactured through the hot-rolling process described above. A cold-rolled steel sheet may be manufactured through the cold-rolling operation S300.

In the annealing operation S400, the cold-rolled base material 100 may be annealed at a temperature of about 700 °C or greater. For example, the annealing operation S400 may include an operation of heating the cold-rolled base material 100 and cooling the heated base material 100 at a certain cooling rate.

In an embodiment, the base material may be annealed in the annealing operation S400. The annealing operation S400 may be performed in an annealing furnace.

Annealing of the base material 100 may be performed in a gas atmosphere including about 0.5 volume% to about 25 volume% of hydrogen and the remainder of nitrogen. At this time, water may be injected into the annealing furnace together with hydrogen gas and nitrogen gas. When water is injected into the annealing furnace, the dew point of the annealing furnace may increase. Thus, the dew point of the annealing furnace may be adjusted by adjusting the amount of water injected into the annealing furnace.

In addition, when the dew point of the annealing furnace increases, the decarburized layer 200 may be formed on the base material 100. For example, carbon may be lost from the surface of the base material 100 to form the decarburized layer 200. At this time, a thickness t3 of the decarburized layer 200 formed on the surface of the base material 100 may be

about 10 $\mu$m to about 100 $\mu$m in the thickness direction of the base material 100. In a case in which the thickness t3 of the decarburized layer 200 is 10 $\mu$m or less, the thickness t3 of the decarburized layer 200 is too thin, resulting in an minimal effect of improving the toughness of the manufactured hot-stamped part, and in a case in which the thickness t3 of the decarburized layer 200 is 100 $\mu$m or greater, the thickness of the decarburized layer 200 is too thick, resulting in a decrease in the strength of the manufactured hot-stamped part. Thus, in a case in which the thickness t3 of the decarburized layer 200 is about 10 $\mu$m to about 100 $\mu$m, the toughness of the manufactured hot-stamped part 1 may be improved while preventing or minimizing a decrease in the strength of the hot-stamped part 1.

In an embodiment, a layer having a hardness of about 80 % or less compared to the average hardness of a point at about 1/4 from the surface of the base material 100 may be defined as the decarburized layer 200. That is, the average hardness of the decarburized layer 200 may be about 80 % or less compared to the average hardness of a point at about 1/4 from the surface of the base material 100.

In an embodiment, the dew point of the annealing furnace in which the annealing of the base material 100 is performed may be about -15 °C to about +15 °C. In a case in which the dew point of the annealing furnace is -15 °C or less, the thickness t3 of the formed decarburized layer 200 may be too thin, resulting in an minimal effect of improving the toughness of the manufactured hot-stamped part, and in a case in which the dew point of the annealing furnace is +15 °C or greater, the operability may be reduced due to oxidation of the equipment. For example, in order to increase the dew point of the annealing furnace, it is necessary to supply a large amount of water to the annealing furnace, however, when a large amount of water is supplied to the annealing furnace, the equipment of the annealing furnace may be oxidized, and cleaning it may take a lot of time, which may reduce the operability. Thus, by ensuring that the dew point of the annealing furnace in which the annealing of the base material 100 is performed is within the range of about -15 °C to about +15 °C, the toughness of the manufactured hot-stamped part may be improved while improving the efficiency of the manufacturing process.

In an embodiment, the line speed of the annealing furnace in which annealing of the base material 100 is performed may be about 30 meters per minute (mpm) to about 200 mpm. When the line speed of the annealing furnace is 30 mpm or less, the transfer speed of the base material 100 may be too slow, which may lead to a sharp decrease in productivity, and when the line speed of the annealing furnace is 200 mpm or greater, the transfer speed of the base material 100 may be too fast, which may lead to a decrease in the thickness of the formed decarburized layer 200, and as a result, the effect of improving the toughness of the manufactured hot-stamped part may be minimal. Thus, in a case in which the line speed of the annealing furnace in which annealing of the base material 100 is performed is within the range of about 30 meters per minute (mpm) to about 200 mpm, the productivity of the hot-stamped part may be improved while improving the toughness of the manufactured hot-stamped part.

In an embodiment, the annealing temperature of the base material 100 may be about 750 °C to about 900 °C. In a case in which the annealing temperature of the base material 100 is less than about 750 °C, the desired structure cannot be obtained and recrystallization may not be sufficiently completed. On the contrary, in a case in which the annealing temperature of the base material 100 is greater than about 900 °C, the annealing temperature may be too high and the efficiency of the manufacturing process may be reduced. Thus, in a case in which the annealing temperature of the base material 100 is within the range of about 750 °C to about 900 °C, the desired structure may be obtained, recrystallization may be sufficiently completed, and the efficiency of the manufacturing process may be improved.

The plating operation S500 may be an operation of forming a plating layer on the annealed base material 100. In an embodiment, the plating layer 300 may be formed on the annealed base material 100 through the plating operation S500. In detail, the plating layer 300 may be formed on the decarburized layer 200 through the plating operation S500. Here, the plating layer 300 may include a zinc (Zn)-based plating layer or an aluminum (Al)-based plating layer.

In detail, in the plating operation S500, the annealed base material 100 may be immersed in a plating bath. At this time, the plating bath may maintain a temperature of about 400 °C to about 700 °C. The plating layer may be formed by plating on both surfaces of the base material 100 (or the decarburized layer 200) at about 40 g/m$^2$ to about 200 g/m$^2$.

In an embodiment, a thickness t4 of the plating layer 300 formed on the base material 100 or the decarburized layer 200 may be about 5 $\mu$m to about 30 $\mu$m. In a case in which the thickness t4 of the plating layer 300 is about 5 $\mu$m or less, the sacrificial ability of the plating layer 300 may be insufficient, and in a case in which the thickness t4 of the plating layer 300 is about 30 $\mu$m or greater, the cost of forming the plating layer 300 may increase, resulting in a decrease in economic feasibility. Thus, in a case in which the thickness t4 of the plating layer 300 is within the range of about 5 $\mu$m to about 30 $\mu$m, corrosion of the base material 100 of the hot-stamped part may be prevented or minimized.

In an embodiment, the annealing operation S400 and the plating operation S500 may be performed on the same line. Thus, the line speed at which the plating operation S500 is performed may be from about 30 mpm to about 200 mpm. In a case in which the line speed is 30 mpm or less, the line speed may be too slow, resulting in reduced productivity. The plating amount is controlled by using an air knife, and in a case in which the line speed is 200 mpm or greater, it may be difficult to control the plating amount by using the air knife because the line speed is too fast. Thus, in a case in which the line speed at which the plating operation S500 is performed is within the range of about 30 mpm to about 200 mpm, the productivity may be improved while easily controlling the plating amount.

In an embodiment, a plated steel sheet may be manufactured in which the plating layer 300 is formed above at least one surface of the base material 100 through the plating operation S500. Here, the plated steel sheet may include the base material 100, the decarburized layer 200 arranged on the base material 100, and the plating layer 300 arranged on the decarburized layer 200.

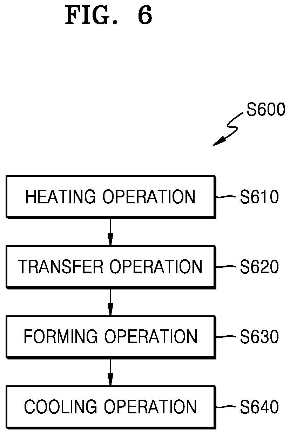

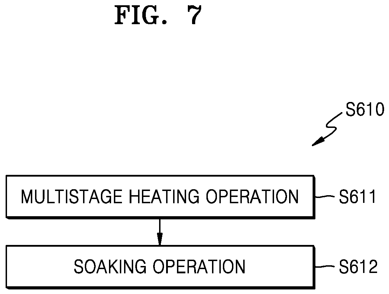

FIG. 6 is a flowchart schematically illustrating a hot-stamping operation according to an embodiment of the present disclosure, and FIG. 7 is a flowchart schematically illustrating a heating operation according to an embodiment of the present disclosure.

Referring to FIGS. 3 and 6, the hot-stamping operation S600 may be performed after the plating operation S500. The hot-stamping operation S600 may include a heating operation S610, a transfer operation S620, a forming operation S630, and a cooling operation S640.

First, a blank may be formed by cutting a plated steel sheet having the plating layer 300 formed above at least one surface of the base material 100. However, the present disclosure is not limited thereto.

In the heating operation S610, the blank may be heated in a heating furnace including a plurality of sections having different temperature ranges. As illustrated in FIG. 7, the heating operation S610 may include a multistage heating operation S611 and a soaking operation S612. The multistage heating operation S611 and the soaking operation S612 may be operations in which the blank is heated while passing through the plurality of sections provided in the heating furnace.

In an embodiment, the overall temperature of the heating furnace may be about 680 °C to about 910 °C. In detail, the overall temperature of the heating furnace in which the multistage heating operation S611 and the soaking operation S612 are performed may be about 680 °C to about 910 °C. Here, the temperature of the heating furnace at which the multistage heating operation S611 is performed may be from about 680 °C to Ac3, and the temperature of the heating furnace at which the soaking operation S612 is performed may be from Ac3 to about 910 °C.

In the multistage heating operation S611, the blank may be heated (or may increase in temperature) in stages while passing through the plurality of sections provided in the heating furnace. Among the plurality of sections provided in the heating furnace, there may be a plurality of sections in which the multistage heating operation S611 is performed, and the temperature is set for each section such that the temperature increases from the inlet of the heating furnace into which the blank is fed, toward the outlet of the heating furnace from which the blank is taken out, and thus, the blank may be heated (or may increase in temperature) in stages.

The soaking operation S612 may be performed after the multistage heating operation S611. In the soaking operation S612, the multistage-heated blank may be heated (or soaked) while passing through sections of the heating furnace that are set to a temperature of Ac3 to about 910 °C. Among the plurality of sections provided in the heating furnace, there may be at least one section in which the soaking operation S612 is performed.

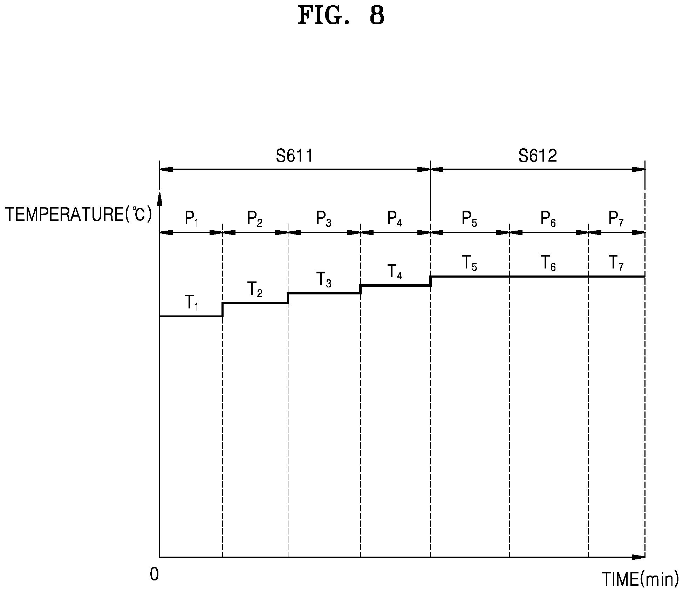

FIG. 8 is a diagram for describing a heating furnace including a plurality of sections for a heating operation of a method of manufacturing a hot-stamped part, according to an embodiment of the present disclosure.

Referring to FIG. 8, a heating furnace according to an embodiment may include a plurality of sections having different temperature ranges. In detail, the heating furnace may include a first section $P_1$ having a first temperature range $T_1$, a second section $P_2$ having a second temperature range $T_2$, a third section $P_3$ having a third temperature range $T_3$, a fourth section $P_4$ having a fourth temperature range $T_4$, a fifth section $P_5$ having a fifth temperature range $T_5$, a sixth section $P_6$ having a sixth temperature range $T_6$, and a seventh section $P_7$ having a seventh temperature range $T_7$.

In an embodiment, in the multistage heating operation S611, the blank may be heated in stages while passing through the first section $P_1$ to the fourth section $P_4$ that are defined within the heating furnace. In addition, in the soaking operation S612, the blank that has been multistage-heated through the first section $P_1$ to the fourth section $P_4$ may be soaked while passing through the fifth section $P_5$ to the seventh section $P_7$.

The first section $P_1$ to the seventh section $P_7$ may be arranged sequentially within the heating furnace. The first section $P_1$ having the first temperature range $T_1$ may be adjacent to the inlet of the heating furnace into which the blank is fed, and the seventh section $P_7$ having the seventh temperature range $T_7$ may be adjacent to the outlet of the heating furnace from which the blank is discharged. Thus, the first section $P_1$ having the first temperature range $T_1$ may be the first section of the furnace, and the seventh section $P_7$ having the seventh temperature range $T_7$ may be the last section of the furnace.

The temperatures of the plurality of sections provided in the heating furnace, for example, the temperatures of the first section $P_1$ to the seventh section $P_7$, may increase from the inlet of the heating furnace into which the blank is fed, toward the outlet of the heating furnace from which the blank is taken out. However, the fifth section $P_5$, the sixth section $P_6$, and the seventh section $P_7$ may have the same temperature. In addition, the temperature difference between two adjacent sections among the plurality of sections provided in the heating furnace may be greater than 0 °C but less than or equal to about 100 °C. For example, the temperature difference between the first section $P_1$ and the second section $P_2$ may be greater than 0 °C but less than or equal to about 100 °C.

The temperature of the heating furnace in the soaking operation S612 may be Ac3 to about 910 °C. In a case in which the temperature of the heating furnace in the soaking operation S612 is Ac3 or less, the manufactured hot-stamped part may not have the desired material quality. On the contrary, in a case in which the temperature of the heating furnace in the soaking operation S612 is about 910 °C or greater, zinc (Zn) included in the plating layer 300 may vaporize, resulting in loss of the plating layer 300. Thus, in a case in which the temperature of the heating furnace in the soaking operation S612 is within the range of Ac3 to about 910 °C, the manufactured hot-stamped part may be formed with the desired material quality while preventing or minimizing loss of the plating layer 300.

FIG. 8 illustrates that the heating furnace according to an embodiment includes seven sections having different temperature ranges, but the present disclosure is not limited thereto. The heating furnace may include five, six, or eight sections having different temperature ranges.

In an embodiment, as the heating operation S610 includes the multistage heating operation S611 and the soaking operation S612, the temperature of the heating furnace may be set in stages, and thus, the energy efficiency of the heating furnace may be improved.

In an embodiment, the heating furnace may have a length of about 20 m to about 40 m along a transfer path of the blank. The heating furnace may include a plurality of sections having different temperature ranges, and the ratio of the length of sections from among the plurality of sections in which the blank is multistage-heated, to the length of sections from among the plurality of sections in which the blank is soaked may be within the range of about 1:1 to about 4:1. In a case in which the length of the sections of the heating furnace in which the blank is soaked increases such that the ratio of the length of the sections in which the blank is multistage-heated, to the length of the sections in which the blank is soaked is greater than about 1:1, the amount of hydrogen penetrating into the blank in the soaking sections increases, which may increase delayed fracture. On the contrary, in a case in which the length of the sections in which the blank is soaked decreases such that the ratio of the length of the sections in which the blank is multistage-heated, to the length of the sections in which the blank is soaked is less than about 4:1, the soaking section (or time) is not sufficiently secured, and thus, the strength of a hot-stamped part manufactured by the manufacturing process of a hot-stamped part may be uneven. For example, the length of uniform heating sections from among the plurality of sections provided in the heating furnace may be about 20 % to about 50 % of the total length of the heating furnace.

In an embodiment, the total heating time during which the heating operation S610 is performed may be from about 2 min to about 20 min. That is, the total time during which the blank remains in the heating furnace may be about 2 minutes to about 20 minutes. In a case in which the total heating time during which the heating operation S610 is performed is less than about 2 min, the manufactured hot-stamped part may not have the desired material quality due to an insufficient heating time. On the contrary, in a case in which the total heating time during which the heating operation S610 is performed is about 20 min or longer, the heating time may be too long, which may lower the production rate and thus reduce economic feasibility. Thus, in a case in which the total heating time during which the heating operation S610 is performed is within the range of about 2 min to about 20 min, the manufactured hot-stamped part may have the desired material quality, while preventing or minimizing a deterioration in the economic feasibility of the manufacturing process.

After the heating operation S610, the transfer operation S620, the forming operation S630, and the cooling operation S640 may be further performed.

In an embodiment, the transfer operation S620 may be an operation of transferring the heated blank from the heating furnace to a mold. Here, in the transfer operation S620, the heated blank may be cooled at ambient temperature (or room temperature). That is, the heated blank may be air-cooled during the transfer. When the heated blank is not air-cooled, a mold entry temperature (e.g., a molding start temperature) may increase, which may cause wrinkles (or curvatures) on the surface of the manufactured hot-stamped part. In addition, it may be desirable for the heated blank to be air-cooled during the transfer, because the use of a refrigerant may affect the subsequent process (hot stamping).

In an embodiment, the forming operation S630 may be an operation of forming a molded body by hot-stamping the transferred blank. In detail, in the forming operation S630, the blank may be pressed by using the mold to form a molded body.

In an embodiment, the molding start temperature may be about 500 °C to about 700 °C. In a case in which the molding start temperature is less than 500 °C, the molding start temperature may be too low, which may result in reduced formability of the blank, and the manufactured hot-stamped part may not have the desired structure and physical properties. On the contrary, in a case in which the molding start temperature is greater than about 700 °C, wrinkles (or curvatures) may occur on the surface of the manufactured hot-stamped part. In addition, the plating layer may be sintered in the mold. Thus, in a case in which the molding start temperature is about 500 °C or to about 700 °C, the formability of the blank may be improved, the manufactured hot-stamped part may have the desired structure and physical properties, and the occurrence of wrinkles (or curvatures) on the surface of the manufactured hot-stamped part may be prevented or minimized.

In an embodiment, the cooling operation S640 may be an operation of cooling the formed molded body. The cooling operation S640 may be performed within the mold in which the blank has been pressed.

In detail, a final product may be formed by simultaneously molding the blank into a final part shape and cooling the molded body in the mold. The mold may be provided with a cooling channel in which a refrigerant circulates. The molded body may be rapidly cooled by circulation of the refrigerant supplied through the cooling channel provided in the mold.

Here, in order to prevent a spring back phenomenon of a sheet material and maintain the desired shape, rapid cooling may be performed while applying pressure with the mold closed. When forming and cooling the molded body, the average cooling rate may be set to at least about 10 °C/s to a martensite end temperature.

In an embodiment, a cooling end temperature at which the cooling operation S640 is terminated may be about room temperature to about 200 °C. In a case in which the cooling end temperature is less than room temperature, the productivity of the manufacturing process may be reduced. On the contrary, in a case in which the cooling end temperature is greater than about 200 °C, when the manufactured hot-stamped part is air-cooled at room temperature, distortion may occur in the hot-stamped part, and it may be difficult to achieve the desired material quality. Thus, in a case in which the cooling end temperature at which the cooling operation S640 is terminated is within the range of about room temperature to about 200 °C, the productivity of the manufacturing process may be improved, and distortion of the manufactured hot-stamped part may be prevented or minimized.

In order to secure the shock absorption performance of the hot-stamped part, the hot-stamped part needs to have a certain level or higher (or a preset level or higher) of toughness. Here, the toughness of the hot-stamped part may be improved by adding alloying elements, but adding alloy elements may increase the manufacturing cost of the hot-stamped part, resulting in a decrease in economic feasibility. Therefore, it is necessary to control the process conditions for manufacturing a hot-stamped part such that the hot-stamped part has a certain level or higher (or a preset level or higher) of toughness. However, process conditions may be required to manufacture a hot-stamped part having a certain level or higher (or a preset level or higher) of toughness, even when using various types of materials.

Accordingly, the inventor of the present disclosure has derived, through excessively repeated experiments, relational expression 2 that enables a manufactured hot-stamped part to have a VDA bending angle of about 60° or greater. In an embodiment, a method of manufacturing a hot-stamped part may satisfy relational expression 2 below. In detail, the temperature $a_n$ in the soaking operation and the total heating time $b_n$ in the heating operation of the method of manufacturing a hot-stamped part may satisfy relational expression 2 below.

<Relational expression 2>

$$62 \le 91.81 + K - 0.022 \times a_n - 0.23 \times b_n$$

In relational expression 2, K denotes a material correction coefficient. Here, the material correction coefficient K is $0.71 \times c_n - 0.025 \times d_n$, and in the material correction coefficient K, $c_n$ denotes the dew point of the annealing furnace of the base material, and $d_n$ denotes the line speed of the annealing furnace of the base material.

In relational expression 2, $a_n$ may denote a temperature in a soaking operation, the unit of the temperature in the soaking operation may be °C, and the value of $a_n$ may represent the value of the temperature in the soaking operation in °C. For example, in a case in which the temperature in the soaking operation is 900 °C, the value of $a_n$ may be 900.

In relational expression 2, $b_n$ may denote a total heating time in the heating operation (e.g., the total heating time in the operation of heating the blank), the unit of the total heating time in the heating operation may be minutes (min), and $b_n$ may represent the value of the total heating time in the heating operation in minutes. For example, in a case in which the total heating time in the heating operation is 5 min, the value of $b_n$ may be 5.

As described above, in relational expression 2, K may denote a material correction coefficient. Here, the material correction coefficient K may be $0.71 \times c_n - 0.025 \times d_n$. In the material correction coefficient K, $c_n$ may denote the dew point of the annealing furnace of the base material, and the unit of the dew point of the annealing furnace of the base material may be °C, and $c_n$ may represent the value of the dew point of the annealing furnace of the base material in °C. For example in a case in which the dew point of the annealing furnace of the base material is +10 °C, the value of $c_n$ may be 10. In addition, in the material correction coefficient K, $d_n$ may denote the line speed of the annealing furnace of the base material, and the unit of the line speed of the annealing furnace of the base material may be meters per minute (mpm), and $d_n$ may represent the value of the line speed of the annealing furnace of the base material in mpm. For example, in a case in which the line speed of the annealing furnace of the base material is 100 mpm, the value of $d_n$ may be 100.

In an embodiment, the temperature $a_n$ in the soaking operation and the total heating time $b_n$ in the heating operation may satisfy relational expression 2 above. Here, because the material correction coefficient K is a coefficient depending on the dew point $c_n$ of the annealing furnace of the base material and the line speed $d_n$ of the annealing furnace of the base material, it may also be described that the temperature $a_n$ in the soaking operation, the total heating time $b_n$ in the heating step, the dew point $c_n$ of the annealing furnace of the base material, and the line speed $d_n$ of the annealing furnace of the base material satisfy relational expression 2 above.

Here, the temperature $a_n$ in the soaking operation may be about Ac3 to about 910 °C, the total heating time $b_n$ in the heating operation may be about 2 min to about 20 min, the dew point $c_n$ of the annealing furnace of the base material may be about -15 °C to about +15 °C, and the line speed $d_n$ of the annealing furnace of the base material may be about 30 mpm to about 200 mpm.

In a case in which the temperature $a_n$ in the soaking operation and the total heating time $b_n$ in the heating

operation satisfy relational expression 2 above, the toughness of the hot-stamped part 1 manufactured through the method of manufacturing a hot-stamped part may be improved. In detail, in a case in which the temperature $a_n$ in the soaking operation and the total heating time $b_n$ in the heating operation satisfy relational expression 2 above, the hot-stamped part 1 manufactured through the method of manufacturing a hot-stamped part may have a VDA bending angle of about 60° or greater. In addition, the hot-stamped part 1 manufactured through the method of manufacturing a hot-stamped part may have a tensile strength (TS) of about 1,680 MPa to about 2,000 MPa, a yield strength (YP) of about 1,150 MPa to about 1,500 MPa, and an elongation (EL) of about 4 % to about 10 %.

In other words, in a case in which the temperature $a_n$ in the soaking operation, the total heating time $b_n$ in the heating operation, the dew point $c_n$ of the annealing furnace of the base material, and the line speed $d_n$ of the annealing furnace of the base material satisfy relational expression 2 above, the toughness of the hot-stamped part 1 manufactured through the method of manufacturing a hot-stamped part may be improved. In detail, in a case in which the temperature $a_n$ in the soaking operation, the total heating time $b_n$ in the heating operation, the dew point $c_n$ of the annealing furnace of the base material, and the line speed $d_n$ of the annealing furnace of the base material satisfy relational expression 2 above, the hot-stamped part 1 manufactured through the method of manufacturing a hot-stamped part may have a VDA bending angle of about 60° or greater. In addition, the hot-stamped part 1 manufactured through the method of manufacturing a hot-stamped part may have a tensile strength (TS) of about 1,680 MPa to about 2,000 MPa, a yield strength (YP) of about 1,150 MPa to about 1,500 MPa, and an elongation (EL) of about 4 % to about 10 %.

Although the present disclosure has been described with reference to the embodiments illustrated in the drawings, they are merely exemplary, and it will be understood by one of skill in the art that various modifications and equivalent embodiments may be made therefrom. Therefore, the true technical protection scope of the present disclosure should be determined by the appended claims.

**Claims**

1.  A method of manufacturing a hot-stamped part, the method comprising:

    forming a blank by cutting a plated steel sheet having a plating layer formed on at least one surface of a base material; and
    heating the blank in a heating furnace comprising a plurality of sections having different temperature ranges, wherein the heating of the blank comprises:

    a multistage heating operation of heating the blank in stages; and
    a soaking operation of soaking the blank, which has been heated in the stages, in a temperature of Ac3 to 910 °C, and
    a temperature $a_n$ in the soaking operation and a total heating time $b_n$ in the heating of the blank satisfy a relational expression:

    $$62 \leq 91.81 + K - 0.022 \times a_n - 0.23 \times b_n,$$

    wherein K denotes a material correction coefficient.

2.  The method of claim 1, wherein the total heating time $b_n$ in the heating of the blank is 2 min to 20 min.

3.  The method of claim 1, wherein the material correction coefficient K is $0.71 \times c_n - 0.025 \times d_n$, wherein $c_n$ denotes a dew point of an annealing furnace of the base material, and $d_n$ denotes a line speed of the annealing furnace of the base material.

4.  The method of claim 3, wherein the dew point $c_n$ of the annealing furnace of the base material is -15 °C to +15 °C.

5.  The method of claim 3, wherein the line speed $d_n$ of the annealing furnace of the base material is 30 mpm to 200 mpm.

6.  The method of claim 1, wherein an annealing temperature of the base material is 750 °C to 900 °C.

7.  The method of claim 1, wherein annealing of the base material is performed in a gas atmosphere comprising 0.5 volume% to 25 volume% of hydrogen and a remainder of nitrogen.

8. The method of claim 1, wherein a decarburized layer is further formed on the base material.

9. The method of claim 8, wherein a thickness of the decarburized layer is 10 $\mu$m to 100 $\mu$m.

10. The method of claim 8, wherein an average hardness of the decarburized layer is less than or equal to 80 % of an average hardness of a 1/4 point from a surface of the base material.

11. The method of claim 1, wherein the plating layer is a zinc (Zn)-based plating layer or an aluminum (Al)-based plating layer.

12. The method of claim 1, wherein a thickness of the plating layer is 5 $\mu$m to 30 $\mu$m.

13. The method of claim 1, further comprising:

after the heating of the blank, transferring the heated blank;
forming a molded body by pressing the transferred blank with a mold; and
cooling the formed molded body.

14. A hot-stamped part comprising:

a base material;
a decarburized layer formed on the base material; and
a plating layer formed on the decarburized layer,
wherein the hot-stamped part has a tensile strength (TS) of 1,680 MPa to 2,000 MPa, a yield strength (YP) of 1,150 MPa to 1,500 MPa, and an elongation (EL) of 4 % to 10 %.

15. The hot-stamped part of claim 14, wherein an average hardness of the decarburized layer is less than or equal to 70 % of an average hardness of a 1/4 point from a surface of the base material.

16. The hot-stamped part of claim 14, wherein a content of carbon included in the plating layer is less than or equal to 50 % of a content of carbon included in the base material.

17. The hot-stamped part of claim 14, wherein the hot-stamped part has a microstructure comprising a martensite fraction of 90 % or greater.

18. The hot-stamped part of claim 14, wherein a thickness of the decarburized layer is 10 $\mu$m to 100 $\mu$m.

19. The hot-stamped part of claim 14, wherein a thickness of the plating layer is 7 $\mu$m to 40 $\mu$m.

# FIG. 1

# FIG. 2

| | |
|---|---|
| HOT-ROLLING OPERATION | ─ S100 |
| COOLING/COILING OPERATION | ─ S200 |
| COLD-ROLLING OPERATION | ─ S300 |
| ANNEALING OPERATION | ─ S400 |
| PLATING OPERATION | ─ S500 |
| HOT-STAMPING OPERATION | ─ S600 |

# FIG. 3

100

# FIG. 4

t3

200

100

# FIG. 5

# FIG. 6

S600

| HEATING OPERATION | — S610 |

↓

| TRANSFER OPERATION | — S620 |

↓

| FORMING OPERATION | — S630 |

↓

| COOLING OPERATION | — S640 |

# FIG. 7

S610

| MULTISTAGE HEATING OPERATION | — S611 |

↓

| SOAKING OPERATION | — S612 |

# FIG. 8

<div align="center">**INTERNATIONAL SEARCH REPORT**</div>

| | International application No. |
|---|---|
| | **PCT/KR2022/020566** |

| A. | CLASSIFICATION OF SUBJECT MATTER |
|---|---|
| | **C21D 9/46**(2006.01)i; **C21D 8/02**(2006.01)i; **B21D 22/02**(2006.01)i; **C23C 2/06**(2006.01)i; **C23C 2/12**(2006.01)i |

According to International Patent Classification (IPC) or to both national classification and IPC

| B. | FIELDS SEARCHED |
|---|---|

Minimum documentation searched (classification system followed by classification symbols)

C21D 9/46(2006.01); B21B 3/02(2006.01); B21B 37/16(2006.01); B21D 22/02(2006.01); B21D 35/00(2006.01); C09D 7/63(2018.01); C21D 8/04(2006.01); C22C 38/04(2006.01); C22C 38/22(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 핫스탬핑(hot stamping), 도금(plating), 소둔(annealing), 균열(soaking), 블랭크(blank), 탈탄층(decarbonization layer)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2021-0080176 A (HYUNDAI STEEL COMPANY) 30 June 2021 (2021-06-30) See paragraph [0118] and claims 4-5, 12, 15 and 20. | 1-2,11-13 |
| Y | | 3-10 |
| X | KR 10-2021-0037106 A (HYUNDAI STEEL COMPANY) 06 April 2021 (2021-04-06) See paragraphs [0022], [0080] and [0084], claims 1 and 6 and table 3. | 14-19 |
| Y | | 3-10 |
| A | KR 10-2021-0120477 A (HYUNDAI STEEL COMPANY) 07 October 2021 (2021-10-07) See claims 2-3, 5, 8 and 11-12. | 1-19 |
| A | KR 10-2019-0001493 A (HYUNDAI STEEL COMPANY) 04 January 2019 (2019-01-04) See paragraph [0082] and claims 1, 4 and 6-7. | 1-19 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **02 August 2023** | **02 August 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2022/020566**

**C.    DOCUMENTS CONSIDERED TO BE RELEVANT**

| Category* | Citation of document, with indication, where appropriate, of the relevant passages | Relevant to claim No. |
|---|---|---|
| A | KR 10-2021-0080175 A (HYUNDAI STEEL COMPANY) 30 June 2021 (2021-06-30)<br>See paragraphs [0042] and [0066] and claim 13. | 1-19 |

Form PCT/ISA/210 (second sheet) (July 2022)

| | International application No. |
|---|---|
| | **PCT/KR2022/020566** |

| Patent document cited in search report | | | Publication date (day/month/year) | Patent family member(s) | | | Publication date (day/month/year) |
|---|---|---|---|---|---|---|---|
| KR 10-2021-0080176 | A | | 30 June 2021 | CN | 113905832 | A | 07 January 2022 |
| | | | | CZ | 2021536 | A3 | 02 March 2022 |
| | | | | DE | 112020006229 | T5 | 27 October 2022 |
| | | | | KR | 10-2280797 | B1 | 23 July 2021 |
| | | | | US | 2021-0189582 | A1 | 24 June 2021 |
| | | | | WO | 2021-125579 | A1 | 24 June 2021 |
| KR 10-2021-0037106 | A | | 06 April 2021 | KR | 10-2275914 | B1 | 12 July 2021 |
| KR 10-2021-0120477 | A | | 07 October 2021 | KR | 10-2372480 | B1 | 08 March 2022 |
| KR 10-2019-0001493 | A | | 04 January 2019 | CN | 110799281 | A | 14 February 2020 |
| | | | | CN | 110799281 | B | 03 December 2021 |
| | | | | DE | 112017007697 | T5 | 26 March 2020 |
| | | | | KR | 10-2021200 | B1 | 11 September 2019 |
| | | | | US | 11390929 | B2 | 19 July 2022 |
| | | | | US | 2021-0147955 | A1 | 20 May 2021 |
| | | | | WO | 2019-004540 | A1 | 03 January 2019 |
| KR 10-2021-0080175 | A | | 30 June 2021 | CN | 113966413 | A | 21 January 2022 |
| | | | | CZ | 2021535 | A3 | 02 March 2022 |
| | | | | DE | 112020006255 | T5 | 20 October 2022 |
| | | | | KR | 10-2021-0113146 | A | 15 September 2021 |
| | | | | KR | 10-2310965 | B1 | 12 October 2021 |
| | | | | US | 11629395 | B2 | 18 April 2023 |
| | | | | US | 2021-0187583 | A1 | 24 June 2021 |
| | | | | US | 2023-0203634 | A1 | 29 June 2023 |
| | | | | WO | 2021-125581 | A1 | 24 June 2021 |

Form PCT/ISA/210 (patent family annex) (July 2022)

**REFERENCES CITED IN THE DESCRIPTION**

**Patent documents cited in the description**

- KR 1020210129902